(19) Europäisches Patentamt
European Patent Office
Office européen des brevets

(11) **EP 3 462 265 B1**

(12) **EUROPEAN PATENT SPECIFICATION**

(45) Date of publication and mention
of the grant of the patent:
**17.03.2021  Bulletin 2021/11**

(51) Int Cl.:
***G05B 23/02*** *(2006.01)*

(21) Application number: **18182449.1**

(22) Date of filing: **09.07.2018**

(54) **METHOD, APPARATUS, AND DEVICE FOR FACILITATING FAILURE DIAGNOSIS AND MACHINE-READABLE MEDIUM**

VERFAHREN, VORRICHTUNG UND GERÄT ZUR ERLEICHTERUNG EINER FEHLERDIAGNOSE UND MASCHINENLESBARES MEDIUM

PROCÉDÉ, APPAREIL ET DISPOSITIF PERMETTANT DE FACILITER UN DIAGNOSTIC DE DÉFAILLANCE ET SUPPORT LISIBLE PAR MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2017   CN 201710938289**

(43) Date of publication of application:
**03.04.2019   Bulletin 2019/14**

(73) Proprietor: **Siemens Aktiengesellschaft 80333 München (DE)**

(72) Inventors:
• **CHEN, Sheng Xiong Beijing 100176 (CN)**
• **SUN, Qi Beijing (CN)**
• **ZHANG, Peng Beijing (CN)**
• **MENG, Xian Tao Langfang, Hebei 065000 (CN)**

(74) Representative: **Isarpatent Patent- und Rechtsanwälte Behnisch Barth Charles Hassa Peckmann & Partner mbB Friedrichstrasse 31 80801 München (DE)**

(56) References cited:
**US-A1- 2017 097 860**

• **AKOGLU LEMAN ET AL: "Graph based anomaly detection and description: a survey", JOURNAL OF DATA MINING AND KNOWLEDGE DISCOVERY, NORWELL, MA, US, vol. 29, no. 3, 5 July 2014 (2014-07-05), pages 626-688, XP035479581, ISSN: 1384-5810, DOI: 10.1007/S10618-014-0365-Y [retrieved on 2014-07-05]**

**Description**

**BACKGROUND**

**Technical Field**

The present invention relates to the field of failure diagnosis, and especially relates to a method, apparatus, and device for facilitating failure diagnosis and a machine-readable medium.

**Related Art**

Computer numerical control (CNC) machine tools are complex systems, and integrate many technologies such as mechanics, electronics, and fluids. Sometimes, CNC machine tools fail during use processes. However, due to the complexity of CNC machine tools, it is difficult to find the root cause of failures by manual diagnosis to repair, resulting in long-time downtime, productivity reduction and economic loss. It takes a lot of time and effort by manual diagnosis.

In recent years, intelligent failure diagnosis has occurred and attracted high attention of scholars and engineers. Intelligent failure diagnosis makes the failure clearing process more effective and helps users identify problems faster. Popular intelligent failure diagnosis methods include a K-nearest neighbor algorithm, a failure tree algorithm, an artificial neural network, a support vector machine, etc.

However, the current intelligent failure diagnosis methods do not always find the root cause of a failure quickly and accurately, to give repair advices. For example, for a failure tree algorithm, it is difficult to build a failure tree on the basis of failure information. It takes a lot of time and effort to classify and summarize failure information, and a failure tree cannot cover all the information required for failure diagnosis.

US 2017/097860 A1 describes a system component failure diagnoses method.

Akoglu Leman ET AL: "Graph based anomaly detection and description: a survey" describes a general, comprehensive, and structured overview of the state-of-the-art methods for anomaly detection in data represented as graphs. A general framework for the algorithms categorized under various settings: unsupervised versus (semi-)supervised approaches, for static versus dynamic graphs, for attributed versus plain graphs is given.

**SUMMARY**

In view of the above problems, embodiments of the present invention provide a method, apparatus, and device and a machine-readable medium, which facilitate the improvement of speed and accuracy of failure diagnosis.

A method for facilitating failure diagnosis according to the present invention includes the features of patent claim 1.

In a further embodiment, the method also includes: sequencing the at least one known root cause in descending order according to the probability values of the at least one known root cause. Here, sequencing the known root cause in descending order according to the probability values of the known root cause can allow a diagnostician to quickly identify which known root causes are more likely to be the root cause of the failure to be diagnosed.

Calculating the respective similarity values of at least one known root cause includes: calculating a similarity value of each historical failure by using a distance algorithm, on the basis of respective failure phenomena of each historical failure and a specific failure, wherein the similarity value of each historical failure represents the similarity degree between the historical failure and the specific failure; calculating a similarity value of the root cause of each history failure, wherein the similarity value of the root cause of each history failure is equal to the similarity value of each history failure; and calculating respective similarity values of the at least one known root cause, on the basis of the similarity values of the root causes of each history failure. Here, the similarity value of the root cause of each historical failure is first calculated, and then the similarity value of each known root cause is calculated on the basis of the similarity value of the root cause of each historical failure, so that the similarity value of each known root cause can be conveniently and quickly calculated and obtained. On another hand, calculating respective occurrence probabilities of the at least one known root cause includes: calculating at least one candidate probability of any one of the at least one known root cause, wherein each of the at least one candidate probability of the any one of the known root causes represents the occurrence probability of any one of the known root causes under the case that one of at least one failure phenomenon occurs, and the at least one failure phenomenon is a set of failure phenomena of each historical failure; and determining the occurrence probability of the any known root cause, according to the at least one candidate probability of any one of the known root causes. Here, the candidate occurrence probability of each known root cause is first calculated, and then the occurrence probability of each known root cause is calculated on the basis of the candidate occurrence probability, so that the occurrence probability of each known root cause can be conveniently and quickly calculated and obtained.

An apparatus for facilitating failure diagnosis according to the present invention includes the features of patent claim 4.

In a further embodiment, the apparatus also includes a sequencing module, configured to sequence the at least one known root cause in descending order according to the respective probability values of the at least one known root cause. Here, sequencing the known root cause in descending order according to the probability values of the known root cause can allow a diagnostician to quickly identify which known root causes are more likely to be the root cause of the failure to be diagnosed.

The first calculation module includes: a fourth calculating module, configured to calculate a similarity value of each historical failure by using a distance algorithm, according to respective failure phenomena of each historical failure and the specific failure, wherein the similarity value of each historical failure represents the similarity degree between this historical failure and the specific failure; a fifth calculation module, configured to calculate a similarity value of the root cause of each history failure, wherein the similarity value of the root cause of each history failure is equal to the similarity value of each history failure; and a sixth module, configured to calculate respective similarity values of the at least one known root cause, on the basis of the similarity values of the root causes of each historical failure. Here, the similarity value of the root cause of each historical failure is first calculated, and then the similarity value of each known root cause is calculated on the basis of the similarity value of the root cause of each historical failure, so that the similarity value of each known root cause can be conveniently and quickly calculated and obtained.

In a further embodiment, the second calculation module includes: a seventh calculation module, configured to calculate at least one candidate probability of any one of the at least one known root cause, wherein each of the at least one candidate probability of the any one of the known root causes represents the occurrence probability of any one of the known root causes under the situation that one of the at least one failure phenomenon occurs, and the at least one failure phenomenon is a set of failure phenomena of each historical failure; and a determination module, configured to determine the occurrence probability of the any known root cause, according to the at least one candidate probability of any one of the known root causes. Here, the candidate occurrence probability of each known root cause is first calculated, and then the occurrence probability of each known root cause is calculated on the basis of the candidate occurrence probability, so that the occurrence probability of each known root cause can be conveniently and quickly calculated and obtained.

A machine-readable medium according to the present invention includes the features of patent claim 7.

## BRIEF DESCRIPTION OF THE DRAWINGS

Other features, characteristics, advantages, and benefits of the present invention will become more apparent via the following detailed description in combination with drawings.

FIG. 1 shows a general flow chart of a method for facilitating failure diagnosis according to an embodiment of the present invention.

FIG. 2 shows a relationship figure between the maintenance case and its failure phenomenon.

FIG. 3 shows an example of a relationship figure between a maintenance case and its failure phenomenon.

FIG. 4 shows a flow chart of a method for facilitating failure diagnosis according to an embodiment of the present invention.

FIG. 5 shows a schematic figure of an apparatus for facilitating failure diagnosis according to an embodiment of the present invention.

FIG. 6 shows a schematic figure of a device for facilitating failure diagnosis according to an embodiment of the present invention.

| | |
|---|---|
| 100: Method for facilitating failure diagnosis | 102: Acquire failure phenomena and known root causes of historical cases |
| 104: Calculate similarity values of historical cases | 106: Calculate similarity values of known root causes |
| 108: Calculate and acquire lists of known root causes | 110: Calculate similarity values of known root causes |
| 112: Calculate occurrence probabilities of known root causes | 114: Normalization processing |
| 116: Calculate probability values of known root causes | 118: Sequence known root causes |

(continued)

| 400: Method for facilitating failure diagnosis | 402: Calculate similarity values of known root causes |
| 404: Calculate occurrence probabilities of known root causes | 406: Calculate probability values of known root causes |
| 500: Apparatus for facilitating failure diagnosis | 502: First calculation module |
| 504: Second calculation module | 506: Third calculation module |
| 600: Device for facilitating failure diagnosis | 602: Processor |
| 604: Memory | |

## DETAILED DESCRIPTION

In the course of studying the failure diagnosis, the inventor discovered that two same or similar failures have the same or similar failure phenomena. On the basis of the above finding, a scheme of an embodiment of the present invention is made, and considers the relationship and similarity between the failure phenomenon of the failure to be diagnosed and the failure phenomenon of the historical failure, to determine the possibility that the known root cause of each historical failure is the root cause of the failure to be diagnosed. On the basis of this determined possibility, a diagnostician can quickly and accurately determine the root cause of the failure to be diagnosed.

In the following, various embodiments of the present invention will be described in detail with reference to figures.

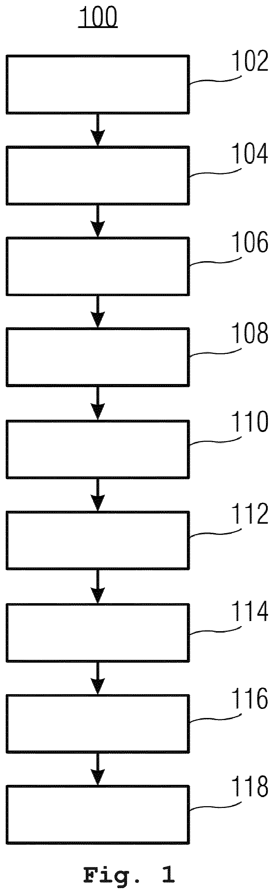

Now referring to FIG. 1, which shows a general flow chart of a method for facilitating failure diagnosis in accordance with one embodiment of the present invention. In the following, the method 100 of this embodiment will be described by taking a CNC machine tool SK as an example.

Here, it is assumed that information of at least one historical maintenance case of the CNC machine tool SK has been stored in a history database, wherein each historical maintenance case is associated with a history failure that has occurred and includes one or more failure phenomena of the associated history failure, a known root cause and a corresponding maintenance scheme.

There is usually only one root cause for each failure, or it may be considered that the root cause of a failure is a failure of one or several components themselves, and is not caused by failures of other components.

As shown in FIG. 1, in box 102, when a new maintenance case NS (the new maintenance case NS is associated with a failure GZ to be diagnosed and contains a failure phenomenon of the failure GZ to be diagnosed) is received, the failure phenomena and known root causes of each historical maintenance case stored in a history database are acquired.

In box 104, by using the acquired failure phenomena of each historical maintenance case and failure phenomena of the new maintenance case NS, a distance algorithm SimRank is executed to calculate similarity values of each historical maintenance case (i.e. the historical failures associated with each historical maintenance case), wherein the similarity value of each historical maintenance case represents the similarity degree between the historical maintenance case (i.e. the historical failures associated with the historical maintenance cases) and the new maintenance case NS (i.e. the failure GZ to be diagnosed and associated with the new maintenance case NS).

SimRank is an iterative algorithm, and the basic formula thereof is:

$$s_{k+1}(a,b) = \frac{C}{|I(a)||I(b)|}\sum_{i=1}^{|I(a)|}\sum_{j=1}^{|I(b)|}s_k(I_i(a),I_j(b)) \qquad (1)$$

wherein, $S_{k+1}(a,b)$ represents the similarity degree between node a and node b of the $(k+1)^{th}$ iteration (when a=b, $S_{k+1}(a,b)=1$), C is a damping coefficient, $|I(a)|$ represents the number of neighboring points of node a, $|I(b)|$ represents the number of neighboring points of the node b, $I_i(a)$ represents the $i^{th}$ neighboring point of node a, and $I_j(b)$ represents the $j^{th}$ neighbor point of node b. From equation (1), it can be seen that the similarity degree between node a and node b of the $(k+1)^{th}$ iteration is calculated by using the similarity degree between neighboring point of node a and neighboring point of node b of the above $k^{th}$ iteration.

The initial similarity degree between node a and node b is:

$$s_0(a,b) = \begin{cases} 1 \; if \, a=b \\ 0 \; if \; a \neq b \end{cases} \qquad (2)$$

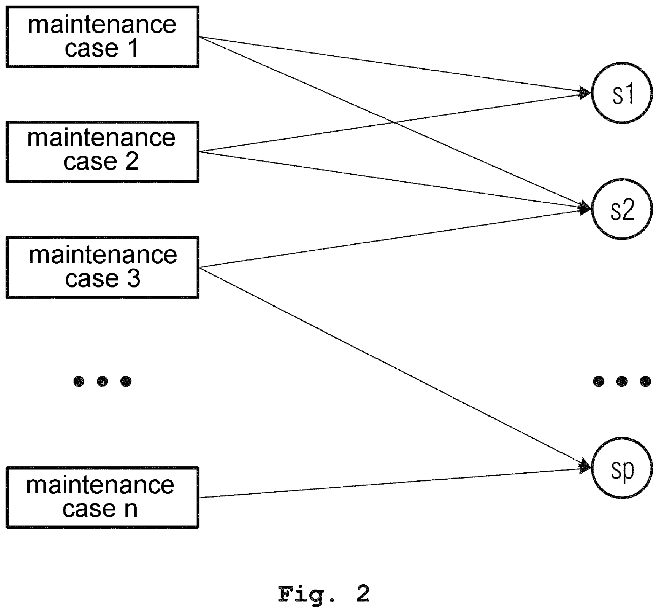

For this embodiment, it is supposed that the relationship figure between a historical maintenance case and a new maintenance case NS and its failure phenomenon is shown in figure 2, wherein maintenance case 1, maintenance case 2, maintenance case 3, ..., maintenance case n form a maintenance case set JC, which is composed of various historical maintenance cases and new maintenance cases NS, and sy1, sy2, ..., syp form a failure phenomenon set GC, which is composed of the respective failure phenomena of each historical maintenance case and the new maintenance case NS. As shown in FIG. 2, from the perspective of the maintenance case, each failure phenomenon connected with each maintenance case in the maintenance case set JC is the neighboring point of the maintenance case; and from the perspective of failure diagnosis, each maintenance case connected with each failure phenomenon in the failure phenomenon set GC is the neighboring point of the failure phenomenon.

In the present embodiment, the similarity value of each historical maintenance case may be calculated by using implementation of the first example or the implementation of the second example.

For the implementation of the first example, first, the initial similarity degree among various failure diagnoses in the failure phenomenon set GC is calculated by using Equation (2). Then, a predetermined number of iterations are performed. In the first iteration, by using the initial similarity degree among the various failure diagnoses in the failure phenomenon set GC, Equation (1) is used to calculate the similarity degree among various maintenance cases in the maintenance case set JC subjected to first iteration. In the second iteration, by using the similarity degree among the various maintenance cases in the maintenance case set JC subjected to first iteration, Equation (1) is used to calculate the similarity degree among various failure diagnoses in the failure phenomenon set GC subjected to second iteration. In the third iteration, by using the similarity degree among the various failure diagnoses in the failure phenomenon GC subjected to the second iteration, Equation (1) is used to calculate the similarity degree among various maintenance cases in the maintenance case set JC subjected to the third iteration. In the fourth iteration, by using the similarity degree among the various maintenance cases in the maintenance case set JC subjected to the third iteration, Equation (1) is used to calculate the similarity degree among various failure diagnoses in the failure phenomenon set GC subjected to the fourth iteration. And so on, until a predetermined number of iterations are performed, to obtain the similarity degree among the various maintenance cases in the maintenance case set JC. Finally, from the similarity degree among the various maintenance cases in the maintenance case set JC, the similarity degree among each historical maintenance case and the new maintenance case NS is found, to serve as the similarity value of each historical maintenance case.

For the implementation of the second example, first, Equation (2) is used to calculate the initial similarity degree among various maintenance cases in the maintenance case set JC. Then, a predetermined number of iterations are performed. In the first iteration, by using the initial similarity degree among the various maintenance cases in the maintenance case set JC, Equation (1) is used to calculate the similarity degree among various failure diagnoses in the failure phenomenon set GC subjected to the first iteration. In the second iteration, by using the similarity degree among various failure diagnoses in the failure phenomenon set GC subjected to the first iteration, Equation (1) is used to calculate the similarity degree among various maintenance cases in the maintenance case set JC subjected to the second iteration. In the third iteration, by using the similarity degree among the various maintenance cases in the maintenance case set JC subjected to the second iteration, Equation (1) is used to calculate the similarity degree among various failure diagnoses in the failure phenomenon set GC subjected to the third iteration. In the fourth iteration, by using the similarity degree among the various failure diagnoses in the failure phenomenon set GC subjected to the third iteration, Equation (1) is used to calculate the similarity degree among various maintenance cases in the maintenance case set JC subjected to the fourth iteration. And so on, until a predetermined number of iterations are performed, to obtain the similarity degree among various maintenance cases in the maintenance case set JC. Finally, from the similarity degree among the various maintenance cases in the maintenance case set JC, the similarity degree between each historical maintenance case and the new maintenance case NS is found, to serve as the similarity value of each historical maintenance case.

In box 106, a similarity value of a known root cause of each historic maintenance case is calculated, wherein the similarity value of a known root cause of each historic maintenance case is equal to the similarity value of the historic maintenance case.

In box 108, a known root cause list LG is acquired, wherein the known root cause list LG is acquired by collecting the known root causes of all historical maintenance cases and removing repeated known root causes. Therefore, if two or more historical maintenance cases have the same known root cause, only one known root cause remains in the known root cause list LG, and thus, the number of the known root causes in the known root cause list LG is equal to or less than the number of historical maintenance cases.

In box 110, the similarity values of known root causes of each historical maintenance case are used to calculate the similarity values of each known root cause in the known root cause list LG. If a certain known root cause LGn in the known root cause list LG is only the root cause of one of the historical maintenance cases, the similarity value of the known root cause LGn in the known root cause list LG is equal to the similarity value of the known root cause LGn of the historical maintenance case. If a certain known root cause LGm in the known root cause list LG is the root cause of two or more historical maintenance cases, the similarity value of the known root cause LGm with the highest similarity value in the two or more historical maintenance cases is selected to serve as the similarity value of the known root cause LGm in the known root cause list LG.

In box 112, a Bayesian algorithm is used to calculate the occurrence probability of each known root cause in the known root cause list LG.

Specifically, first, the occurrence probability P(rc|cs) of each known root cause rc in the known root cause list LG is calculated under the situation that each failure phenomenon cs of the failure phenomenon set GC occurs.

$$P(rc|cs) = \frac{P(cs|rc)P(rc)}{P(cs)} \qquad (3)$$

wherein, P(*cs*|*rc*) represents the occurrence probability of the failure phenomenon cs under the situation that known root cause rc occurs, *P(rc)* represents the occurrence probability of known root cause rc, *P(cs)* represents the occurrence probability of failure phenomenon cs. *P(cs|rc)* is equal to (the occurrence times of failure phenomenon cs)/(the total occurrence times of each failure diagnosis in failure diagnosis WG) in all failure diagnoses WG included by all historical maintenance cases with their root causes being the known root cause rc. *P(rc)* is equal to (the occurrence times of known root cause rc)/(the total occurrence times of each known root cause in all known root causes) in all known root causes in all historical maintenance cases. *P(cs)* is equal to (the occurrence times of failure phenomenon cs)/(the total occurrence times of each failure diagnosis in all failure diagnoses) in all failure diagnoses included by all historical maintenance cases.

Then, for any known root cause in the known root cause list LG, from the occurrence probability of any one of the known root causes under the situation that each failure phenomenon in the failure phenomenon set GC occurs, the largest probability is selected as the occurrence probability of the any one of the known root causes, thereby obtaining the occurrence probability of each of the known root cause in the known root cause list LG.

In box 114, the similarity values and occurrence probabilities of respective known root causes in the known root cause list LG are normalized using Equation (4), respectively.

$$y = \frac{x - x_{min}}{x_{max} - x_{min}} \qquad (4)$$

In box 116, the probability value of each known root cause in the known root cause list LG is calculated using Equation (5), wherein the probability value of each known root cause in the known root cause list LG represents the probability degree that the known root cause is the root cause of failure GZ to be diagnosed and associated with the new maintenance case NS.

$$f = \mu_1 |s| + \mu_2 |p| \qquad (5)$$

wherein f, s, and p respectively represent the probability value, the normalized similarity value, and normalized occurrence probability of each known root cause in the known root cause list LG, and $\mu_1$ and $\mu_2$ are weighting coefficients, wherein $\mu_1 \in (0,1)$, $\mu_2 \in (0,1)$, $\mu_1 + \mu_2 = 1$.

In box 118, the various known root causes in the known root cause list LG are sequenced in descending order according to probability values of the respective known root cause in the known root cause list LG. By looking at the re-sequenced known root causes LG list, a diagnostician can know which known root causes are most likely to be the root cause of the failure GZ to be diagnosed and associated with the new maintenance case NS, so as to quickly and accurately determine the root cause of the failure GZ to be diagnosed.

In the following, the method 100 shown in FIG. 1 is described in detail via an example.

As shown in Table 1, the history database includes two historical maintenance cases, namely, maintenance case 1 and maintenance case 2. Maintenance case 1 includes two failure phenomena "NCAlarm 20005" and "Axis cannot return to reference point" and a known root cause "Value setting cable failure". Maintenance case 2 includes two failure phenomena "NCAlarm 20002" and "Axis cannot return to reference point", and one known root cause "Reference point switch failure."

Table 1

| Maintenance case name | Failure phenomena | Root cause |
|---|---|---|
| Maintenance case 1 | * NCAlarm 20005 <br> * Axis cannot return to reference point | Value setting cable failure |
| Maintenance case 2 | * NCAlarm 20002 <br> * Axis cannot return to reference point | Reference point switch failure |

As shown in Table 2, a user submitted a new maintenance case 3, which includes two failure phenomena "NCAlarm 20005" and "Axis cannot return to reference point."

Table 2

| Maintenance case name | Failure phenomena |
|---|---|
| Maintenance case 3 | * NCAlarm 20005<br>* Axis cannot return to reference point |

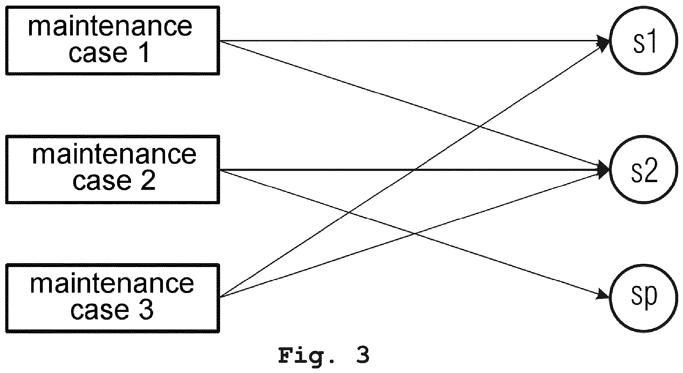

Fig. 3 shows the relationship figure between maintenance case 1, maintenance case 2, maintenance case 3 and their failure phenomena, wherein s1 represents failure phenomenon "NCAlarm 20005", s2 represents failure phenomenon "Axis cannot return to reference point", and s3 represents failure phenomenon "NCAlarm 20002". It can be seen from FIG. 3C that maintenance case 1 is connected with failure phenomena s1 and s2, maintenance case 2 is connected with failure phenomena s2 and s3, and the maintenance case 3 is connected with the failure phenomena s1 and s2.

After performing the distance algorithm SimRank by using the relationship figure shown in FIG. 3 as described in box 104 of the method 100, the similarity degree among maintenance case 1, maintenance case 2 and maintenance case 3 is obtained, as shown in Table 3. From this, the similarity value 0.6268 of maintenance case 1 and the similarity value 0.5001 of maintenance case 2 can be obtained. Correspondingly, the similarity value of the known root cause rc1 of the maintenance case 1 (i.e, "Value setting cable failure") is 0.6268, and the similarity value of the known root cause rc2 of maintenance case 2 (i.e. "Reference point switch failure") is 0.5001.

Table 3

|  | Maintenance case 1 | Maintenance case 2 | Maintenance case 3 |
|---|---|---|---|
| Maintenance case 1 | 1.0 | 0.5001 | 0.6268 |
| Maintenance case 2 | 0.5001 | 1.0 | 0.5001 |
| Maintenance case 3 | 0.6268 | 0.5001 | 1.0 |

Since the known root cause of maintenance case 1 is rc1 and the known root cause of maintenance case 2 is rc2, a known root cause list LG includes known root causes rc1 and rc2.

The similarity value of the known root cause rc1 of maintenance case 1 is 0.6268, the similarity value of the known root cause rc2 of maintenance case 2 is 0.5001, and the known root cause rc1 of maintenance case 1 is different from the known root cause rc2 of maintenance case 2, therefore, the similarity value of the known root cause rc1 of the known root cause list LG is equal to the similarity value 0.6268 of the known root cause rc1 of maintenance case 1, and the similarity value of the known root cause rc2 of the known root cause list LG is equal to the similarity value 0.5001 of the known root cause rc2 of maintenance case 2. That is, the similarity values of the known root causes rc1 and rc2 in the known root cause list LG are 0.6268 and 0.5001, respectively.

According to the operation described in box 112 of the method 100, the occurrence probabilities of the known root causes rc1 and rc2 in the known root cause list LG are 0.4 and 0.42, via calculating by the Bayesian algorithm.

Table 4

|  | Occurrence probability |
|---|---|
| rc1 | 0.40 |
| rc2 | 0.42 |

After the normalization processing according to Equation (4), the normalized similarity value and the normalized occurrence probability of the known root cause rc1 in the known root cause list LG are 1 and 0, respectively; and the normalized similarity value and the normalized occurrence probability of the known root cause rc2 in the root cause list LG are 0 and 1, respectively, as shown in Table 5.

Table 5

|  | Normalized similarity value | Normalized occurrence probability |
| --- | --- | --- |
| rc1 | 1 | 0 |
| rc2 | 0 | 1 |

Assuming $\mu_1$ =0.8 and $\mu_2$ =0.2, after processing according to Equation (5), the probability values of the known root causes rc1 and rc2 in the known root cause list LG can be calculated as 0.8 and 0.2 respectively, as shown in Table 6.

Table 6

|  | Probability value |
| --- | --- |
| rc1 | 0.8 |
| rc2 | 0.2 |

The re-sequenced known root cause list LG is {rc1, rc2}, according to the sequencing of probability values of known root causes rc1 and rc2 in the known root cause list LG in descending order.

Other deformation

Those skilled in the art should understand that, although in the above embodiment, the Bayesian algorithm is used to calculate the occurrence probability of each known root cause in the known root cause list LG, the present invention is not limited to this. In other embodiments of the present invention, other suitable algorithms except for the Bayesian algorithm may also be used to calculate the occurrence probability of each known root cause in the known root cause list LG.

Those skilled in the art should understand that, although in the above embodiment, the method 100 uses Equation (4) to normalize the similarity values and the occurrence probabilities of each known root cause in the known root cause list LG, respectively, the present invention is not limited to this. In other embodiments of the present invention, the similarity values and the occurrence probabilities of each known root cause in the known root cause list LG may also be normalized using other manners except for Equation (4).

Those skilled in the art should understand that, although in the above embodiment, the method 100 includes box 114 to normalize the similarity values and occurrence probabilities of each known root cause in the known root cause list LG, respectively, the present invention is not limited to this. In other embodiments of the present invention, the similarity values and the occurrence probabilities of each known root cause in the known root cause list LG may not be normalized.

Those skilled in the art should understand that, although in the above embodiment, the method 100 includes box 118 to re-sequence each known root cause in the known root cause list LG, the present invention is not limited to this. In other embodiments of the present invention, each known root cause in the known root cause list LG may not be re-sequenced.

Those skilled in the art should understand that, the method 100 is not only applicable to failure diagnosis of a CNC machine tool, but also applicable to failure diagnosis of other suitable objects.

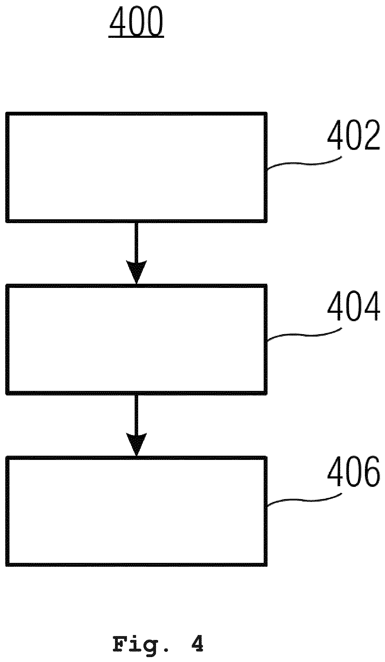

Now referring to FIG. 4, which shows a flow chart of a method for facilitating failure diagnosis in accordance with one embodiment of the present invention. The method 400 shown in FIG. 4 may be performed by a device with computing capabilities such as a server, a notebook computer, and a desktop computer.

As shown in FIG. 4, the method 400 may include, in box 402, calculating respective similarity values of at least one known root cause, on the basis of respective failure phenomena of each historical failure and a specific failure of an object, when the root cause of the specific failure of the object is to be diagnosed, wherein the at least one known root cause is a set of root causes of each historical failure, and the similarity value of each known root cause represents the similarity degree between the known root cause and the root cause of the specific failure.

The method 400 also includes, in box 404, calculating respective occurrence probabilities of the at least one known root cause according to failure phenomena of each history failure.

The method 400 also includes, in box 406, calculating respective probability values of the at least one known root cause, on the basis of the similarity values and the occurrence probabilities of the at least one known root cause, wherein the probability value of each known root cause represents the probability degree that the known root cause is the root cause of the specific failure.

Here, the relationship and similarity between the failure phenomenon of the failure to be diagnosed and the failure phenomena of the historical failures are considered to determine the possibility that the known root cause of each historical failure is the root cause of the failure to be diagnosed. A diagnostician can quickly and accurately determine the root cause of the failure to be diagnosed on the basis of this determined possibility, so as to facilitate the improvement of the speed and accuracy of failure diagnosis.

On one hand, the method 400 also includes: sequencing the at least one known root cause in descending order according to the probability values of the at least one known root cause. Here, sequencing the known root cause in descending order according to the probability values of the known root cause can allow a diagnostician to quickly identify which known root causes are more likely to be the root cause of the failure to be diagnosed.

On another hand, box 402 includes: calculating a similarity value of each historical failure by using a distance algorithm, on the basis of respective failure phenomena of each historical failure and a specific failure, wherein the similarity value of each historical failure represents the similarity degree between the historical failure and the specific failure; calculating a similarity value of the root cause of each history failure, wherein the similarity value of the root cause of each history failure is equal to the similarity value of each history failure; and calculating respective similarity values of the at least one known root cause, on the basis of the similarity values of the root causes of each history failures. Here, the similarity value of the root cause of each historical failure is first calculated, and then the similarity value of each known root cause is calculated on the basis of the similarity value of the root cause of each historical failure, so that the similarity value of each known root cause can be conveniently and quickly calculated and obtained.

On another hand, box 404 includes: calculating at least one candidate probability of any one of the at least one known root cause, wherein each of the at least one candidate probability of the any one of the known root causes represents the occurrence probability of any one of the known root causes under the case that one of at least one failure phenomenon occurs, and the at least one failure phenomenon is a set of failure phenomena of each historical failure; and determining the occurrence probability of the any known root cause, according to the at least one candidate probability of any one of the known root causes. Here, the candidate occurrence probability of each known root cause is first calculated, and then the occurrence probability of each known root cause is calculated on the basis of the candidate occurrence probability, so that the occurrence probability of each known root cause can be conveniently and quickly calculated and obtained.

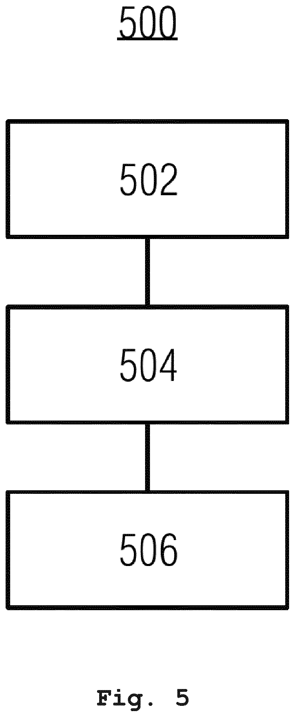

Now referring to FIG. 5, which shows a schematic figure of an apparatus for facilitating failure diagnosis according to an embodiment of the present invention. The apparatus 500 shown by FIG. 5 may be implemented by using software, hardware (such as integrated circuit and DSP), or a combination of software and hardware.

Shown in FIG. 5, the apparatus 500 can include a first calculation module 502, a second calculation module 504, and a third calculation module 506. The first calculation module 502 is configured to calculate respective similarity values of at least one known root cause, on the basis of respective failure phenomena of each historical failure and a specific failure of an object, when the root cause of the specific failure of the object is to be diagnosed, wherein the at least one known root cause is a set of root causes of each historical failure, and the similarity value of each known root cause represents the similarity degree between the known root cause and the root cause of the specific failure. The second calculation module 504 is configured to calculate respective occurrence probabilities of the at least one known root cause according to the failure phenomena of each historical failure. The third calculation module 506 is configured to calculate respective probability values of the at least one known root cause, on the basis of the respective similarity values and the respective occurrence probabilities of the at least one known root cause, wherein the probability value of each known root cause represents the probability degree that the known root cause is the root cause of the specific failure. Here, the relationship and similarity between the failure phenomenon of the failure to be diagnosed and the failure phenomena of the historical failures are considered to determine the possibility that the known root cause of each historical failure is the root cause of the failure to be diagnosed. A diagnostician can quickly and accurately determine the root cause of the failure to be diagnosed on the basis of this determined possibility, so as to facilitate the improvement of the speed and accuracy of failure diagnosis.

On one hand, the apparatus 500 also includes a sequencing module, configured to sequence the at least one known root cause in descending order according to the probability values of the at least one known root cause. Here, sequencing the known root cause in descending order according to the probability values of the known root cause can allow a diagnostician to quickly identify which known root causes are more likely to be the root cause of the failure to be diagnosed.

On another hand, the first calculation module 502 includes: a fourth calculating module, configured to calculate a similarity value of each historical failure by using a distance algorithm, on the basis of respective failure phenomena of each historical failure and a specific failure, wherein the similarity value of each historical failure represents the similarity degree between this historical failure and the specific failure; a fifth calculation module, configured to calculate a similarity value of the root cause of each history failure, wherein the similarity value of the root cause of each history failure is equal to the similarity value of each history failure; and a sixth module, configured to calculate respective similarity values of the at least one known root cause, on the basis of the similarity values of the root causes of each historical failure. Here, the similarity value of the root cause of each historical failure is first calculated, and then the similarity value of each known root cause is calculated on the basis of the similarity value of the root cause of each historical failure, so that the similarity value of each known root cause can be conveniently and quickly calculated and obtained.

On another hand, the second calculation module 504 can include: a seventh calculation module, configured to calculate at least one candidate probability of any one of the at least one known root cause, wherein each of the at least one candidate probability of the any one of the known root causes represents the occurrence probability of any one of the known root causes under the case that one of at least one failure phenomenon occurs, and the at least one failure phenomenon is a set of failure phenomena of each historical failure; and a determination module, configured to determine the occurrence probability of the any known root cause, according to the at least one candidate probability of any one of the known root causes. Here, the candidate occurrence probability of each known root cause is first calculated, and then the occurrence probability of each known root cause is calculated on the basis of the candidate occurrence probability, so that the occurrence probability of each known root cause can be conveniently and quickly calculated and obtained.

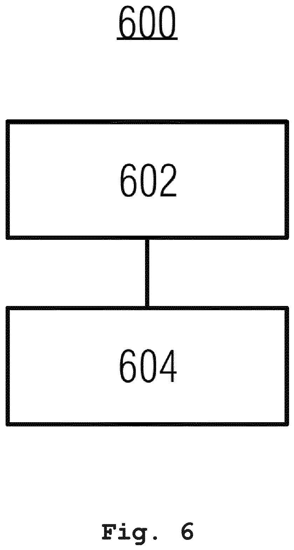

Now referring to FIG. 6, which shows a schematic figure of a device for facilitating failure diagnosis according to an embodiment of the present invention. It is shown in FIG. 6 that the device 600 may include at least one processor 602 and at least one memory 604. The at least one memory 604 is used for storing executable instructions, and the at least one processor 602 is allowed to perform the operations included by the method 100 or 400, when the executable instructions are performed.

Embodiments of the present invention also provide a machine-readable medium with executable instructions stored thereon, and the processor is allowed to perform any one of the above methods, when the readable instructions are executed by the processor. Specifically, a system or apparatus equipped with a machine-readable medium can be provided, and software program codes for realizing the functions of any one of the above embodiments are stored on the machine-readable medium. The computer or processor of the system or apparatus is allowed to read and perform the machine-readable instructions stored on the machine-readable medium.

In this case, the program codes themselves read from the machine-readable medium may implement the functions of any one of the above embodiments, and thus the machine-readable codes and the machine-readable medium for storing the machine-readable codes constitute part of the present invention.

The embodiments of the machine-readable medium include soft disks, hard disks, magneto-optical disks, optical disks (such as CD-ROM, CD-R, CD-RW, DVD-ROM, DVD-RAM, DVD-RW and DVD+RW), magnetic tapes, non-volatile memory cards and ROM. Optionally, program codes may be downloaded from a server computer or clouds by a communication network.

It should be noted that, not all the steps and modules in the above-mentioned processes and system structure diagrams are required, and certain steps or modules may be omitted according to actual needs. The execution order of each step is not fixed and can be adjusted as needed. The system structure described in the above embodiments may be a physical structure or a logical structure. That is, some modules may be implemented by the same physical entity, some modules may be implemented by multiple physical entities, or some modules may be implemented together by some components in multiple independent devices.

In the above embodiments, a hardware unit may be implemented mechanically or electrically. For example, a hardware unit may include a permanently dedicated circuit or logic (such as a specialized processor, FPGA, and ASIC) to perform the corresponding operations. The hardware unit may also include a programmable logic or circuit (such as a general-purpose processor and other programmable processor), and corresponding operations can be performed by software to perform temporary setting. Specific implementation manners (mechanical manners, dedicated permanent circuits, or temporarily-set circuits) can be determined based on considerations of cost and time.

Claims

1. A computer implemented method for facilitating failure diagnosis, comprising:

calculating respective similarity values of at least one known root cause (LGn), on the basis of respective failure phenomena (s1, s2, sp) of each historical failure and a failure phenomenon of a specific failure of an object, when a root cause of the specific failure of the object is to be diagnosed, wherein the at least one known root cause (LGn) is a set of root causes of each historical failure, and the similarity value of each known root cause (LGn) represents a similarity degree between the known root cause (LGn) and the root cause of the specific failure;
calculating respective occurrence probabilities of the at least one known root cause (LGn) according to failure phenomena (s1, s2, sp) of each historical failure; and
calculating respective probability values of the at least one known root cause (LGn), on the basis of the respective similarity values and the respective occurrence probabilities of the at least one known root cause (LGn), wherein the probability value of each known root cause represents the probability degree that the known root cause (LGn) is the root cause of the specific failure;
wherein calculating the respective similarity values of at least one known root cause (LGn) comprises:

calculating a similarity value of each historical failure by using a distance algorithm, according to respective failure phenomena (s1, s2, sp) of each historical failure and the failure phenomenon of the specific failure, wherein the similarity value of each historical failure represents the similarity degree between the historical failure and the specific failure;

calculating a similarity value of the root cause of each historical failure, wherein the similarity value of the root cause of each historical failure is equal to the similarity value of each historical failure; and

calculating respective similarity values of the at least one known root cause (LGn), on the basis of the similarity values of the root causes of each historical failure; and

**characterised in that**

each historical failure is associated with a historical maintenance case including one or more failure phenomena (s1, s2, sp) of the associated historical failure, a known root cause, and a corresponding maintenance scheme,

wherein the specific failure is associated with a new maintenance case (NS) including the failure phenomena of the specific failure,

all the historical maintenance cases and the new maintenance case (NS) form a maintenance case set (JC),

failure phenomena (s1, s2, sp) of each historical maintenance case and the failure phenomena of the new maintenance case (NS) form a failure phenomenon set (GC);

wherein the distance algorithm is SimRank, which is implemented either from a maintenance case perspective, wherein each failure phenomenon connected with a given maintenance case in the maintenance case set (JC) is the neighboring point of the given maintenance case; or

from a failure diagnosis perspective, wherein each maintenance case connected with a given failure phenomenon in the failure phenomenon set (GC) is the neighboring point of the given failure phenomenon.

2. The method of claim 1, further comprising:
   sequencing the at least one known root cause (LGn) in descending order according to the respective probability values of the at least one known root cause (LGn).

3. The method of claim 1 or 2, wherein calculating respective occurrence probabilities of the at least one known root cause (LGn) comprises:

   calculating at least one candidate probability of any one of the at least one known root cause (LGn), wherein each of the at least one candidate probability of the any one of the known root causes represents the occurrence probability of any one of the known root causes under the case that one of at least one failure phenomenon occurs, and the at least one failure phenomenon is a set of failure phenomena (s1, s2, sp) of each historical failure; and

   determining the occurrence probability of the any known root cause, according to the at least one candidate probability of any one of the known root causes, thereby obtaining the respective occurrence probabilities of the at least one known root cause.

4. An apparatus (500) for facilitating failure diagnosis, comprising:

   a first calculation module (502), configured to calculate respective similarity values of at least one known root cause (LGn), on the basis of respective failure phenomena (s1, s2, sp) of each historical failure and a failure phenomenon of a specific failure of an object, when a root cause of the specific failure of the object is to be diagnosed, wherein the at least one known root cause (LGn) is a set of root causes of each historical failure, and the similarity value of each known root cause (LGn) represents a similarity degree between the known root cause (LGn) and the root cause of the specific failure;

   a second calculation module (504), configured to calculate respective occurrence probabilities of the at least one known root cause (LGn) according to failure phenomena (s1, s2, sp) of each historical failure; and

   a third calculation module (506), configured to calculate respective probability values of the at least one known root cause (LGn), on the basis of the respective similarity values and the respective occurrence probabilities of the at least one known root cause (LGn), wherein the probability value of each known root cause represents the probability degree that the known root cause is the root cause of the specific failure;

   wherein the first calculation module (502) comprises:

a fourth calculating module, configured to calculate a similarity value of each historical failure by using a distance algorithm, according to respective failure phenomena (sl,s2,sp) of each historical failure and the failure phenomenon of the specific failure, wherein the similarity value of each historical failure represents the similarity degree between the historical failure and the specific failure;

a fifth calculation module, configured to calculate a similarity value of the root cause of each historical failure, wherein the similarity value of the root cause of each historical failure is equal to the similarity value of each historical failure; and

a sixth module, configured to calculate respective similarity values of the at least one known root cause (LGn), on the basis of the similarity values of the root causes of each historical failure, and

**characterised in that**

each historical failure is associated with a respective historical maintenance case including one or more failure phenomena (s1, s2, sp) of the associated historical failure, a known root cause (LGn) and a corresponding maintenance scheme,

wherein the specific failure is associated with a new maintenance case (NS) including the failure phenomena of the specific failure,

all the historical maintenance cases and the new maintenance case (NS) form a maintenance case set (JC),

failure phenomena (se, s2, sp) of each historical maintenance case and the failure phenomena of the new maintenance case (NS) form a failure phenomenon set (GC);

wherein the distance algorithm is SimRank, whichh is implemented either from a maintenance case perspective, wherein each failure phenomenon connected with a given maintenance case in the maintenance case set (JC) is the neighboring point of the given maintenance case; or

from a failure diagnosis perspective, wherein each maintenance case connected with a given failure phenomenon in the failure phenomenon set (GC) is the neighboring point of the given failure phenomenon.

5. The apparatus (500) of claim 4, further comprising:

a sequencing module, configured to sequence the at least one known root cause (LGn) in descending order according to the respective probability values of the at least one known root cause.

6. The apparatus (500) of claim 4 or 5, wherein the second calculation module (504) comprises:

a seventh calculation module, configured to calculate at least one candidate probability of any one of the at least one known root cause (LGn), wherein each of the at least one candidate probability of the any one of the known root causes represents the occurrence probability of any one of the known root causes under the case that one of the at least one failure phenomenon occurs, and the at least one failure phenomenon is a set of failure phenomena (s1, s2, sp) of each historical failure; and

a determination module, configured to determine the occurrence probability of the any known root cause, according to the at least one candidate probability of any one of the known root causes, thereby obtaining the respective occurrence probabilities of the at least one known root cause.

7. A machine-readable medium with executable instructions stored thereon, wherein a processor performs the method of any one of claims 1 to 3, when said processor executes the executable instructions.

**Patentansprüche**

1. Computerimplementiertes Verfahren zur Erleichterung der Fehlerdiagnose, das Folgendes umfasst:

Berechnen jeweiliger Ähnlichkeitswerte von mindestens einer bekannten Grundursache (LGn) auf der Grundlage von jeweiligen Fehlerphänomenen (s1, s2, sp) jedes historischen Fehlers und eines Fehlerphänomens eines spezifischen Fehlers eines Objekts, wenn eine Grundursache des spezifischen Fehlers des Objekts diagnostiziert werden soll, wobei die mindestens eine bekannte Grundursache (LGn) eine Menge von Grundursachen jedes historischen Fehlers ist und der Ähnlichkeitswert jeder bekannten Grundursache (LGn) einen Ähnlichkeitsgrad zwischen der bekannten Grundursache (LGn) und der Grundursache des spezifischen Fehlers darstellt;

Berechnen jeweiliger Auftrittswahrscheinlichkeiten der mindestens einen bekannten Grundursache (LGn) entsprechend den Fehlerphänomenen (s1, s2, sp) jedes historischen Fehlers; und

Berechnen jeweiliger Wahrscheinlichkeitswerte der mindestens einen bekannten Grundursache (LGn) auf der Grundlage der jeweiligen Ähnlichkeitswerte und der jeweiligen Auftrittswahrscheinlichkeiten der mindestens einen bekannten Grundursache (LGn), wobei der Wahrscheinlichkeitswert jeder bekannten Grundursache den Wahrscheinlichkeitsgrad darstellt, dass die bekannte Grundursache (LGn) die Grundursache des spezifischen Fehlers ist;

wobei das Berechnen der jeweiligen Ähnlichkeitswerte der mindestens einen bekannten Grundursache (LGn) Folgendes umfasst:

Berechnen eines Ähnlichkeitswertes jedes historischen Fehlers durch das Verwenden eines Distanzalgorithmus entsprechend den jeweiligen Fehlerphänomenen (s1, s2, sp) jedes historischen Fehlers und dem Fehlerphänomen des spezifischen Fehlers, wobei der Ähnlichkeitswert jedes historischen Fehlers den Ähnlichkeitsgrad zwischen dem historischen Fehler und dem spezifischen Fehler darstellt;

Berechnen eines Ähnlichkeitswertes der Grundursache jedes historischen Fehlers, wobei der Ähnlichkeitswert der Grundursache jedes historischen Fehlers gleich dem Ähnlichkeitswert jedes historischen Fehlers ist; und

Berechnen von jeweiligen Ähnlichkeitswerten der mindestens einen bekannten Grundursache (LGn) auf der Grundlage der Ähnlichkeitswerte der Grundursachen jedes historischen Fehlers; und

**dadurch gekennzeichnet, dass** jedem historischen Fehler ein historischer Wartungsfall zugeordnet ist, der ein oder mehrere Fehlerphänomene (s1, s2, sp) des zugeordneten historischen Fehlers, eine bekannte Grundursache und ein entsprechendes Wartungsschema enthält,

wobei der spezifische Fehler einem neuen Wartungsfall (NS) zugeordnet ist, der die Fehlerphänomene des spezifischen Fehlers enthält,

alle historischen Wartungsfälle und der neue Wartungsfall (NS) eine Wartungsfallmenge (JC) bilden, Fehlerphänomene (s1, s2, sp) jedes historischen Wartungsfalls und die Fehlerphänomene des neuen Wartungsfalls (NS) eine Fehlerphänomenmenge (GC) bilden;

wobei der Abstandsalgorithmus SimRank ist, der entweder aus einer Wartungsfallperspektive implementiert ist, wobei jedes Fehlerphänomen, das mit einem vorgegebenen Wartungsfall in der Wartungsfallmenge (JC) verbunden ist, dem Nachbarpunkt des vorgegebenen Wartungsfalls entspricht; oder

aus einer Fehlerdiagnoseperspektive implementiert ist, wobei jeder Wartungsfall, der mit einem vorgegebenen Fehlerphänomen in der Fehlerphänomenmenge (GC) verbunden ist, dem Nachbarpunkt des vorgegebenen Fehlerphänomens entspricht.

2. Verfahren nach Anspruch 1, das ferner Folgendes umfasst:
Sequenzieren der mindestens einen bekannten Grundursache (LGn) in absteigender Reihenfolge entsprechend den jeweiligen Wahrscheinlichkeitswerten der mindestens einen bekannten Grundursache (LGn).

3. Verfahren nach Anspruch 1 oder 2, wobei das Berechnen der jeweiligen Auftrittswahrscheinlichkeiten der mindestens einen bekannten Grundursache (LGn) Folgendes umfasst:

Berechnen mindestens einer Kandidatenwahrscheinlichkeit von irgendeiner der mindestens einen bekannten Grundursache (LGn), wobei jede der mindestens einen Kandidatenwahrscheinlichkeit von irgendeiner der bekannten Grundursachen die Auftrittswahrscheinlichkeit irgendeiner der bekannten Grundursachen in dem Fall darstellt, dass ein Fehlerphänomen des mindestens einen Fehlerphänomens auftritt, und das mindestens eine Fehlerphänomen einer Menge von Fehlerphänomenen (s1, s2, sp) jedes historischen Fehlers entspricht; und

Bestimmen der Auftrittswahrscheinlichkeit irgendeiner bekannten Grundursache entsprechend der mindestens einen Kandidatenwahrscheinlichkeit irgendeiner der bekannten Grundursachen, dadurch Erhalten der jeweiligen Auftrittswahrscheinlichkeiten der mindestens einen bekannten Grundursache.

4. Vorrichtung (500) zum Erleichtern der Fehlerdiagnose, die Folgendes umfasst:

ein erstes Berechnungsmodul (502), das konfiguriert ist, jeweilige Ähnlichkeitswerte von mindestens einer bekannten Grundursache (LGn), auf der Grundlage der jeweiligen Fehlerphänomene (s1, s2, sp) jedes historischen Fehlers und eines Fehlerphänomens eines spezifischen Fehlers eines Objekts zu berechnen, wenn eine Grundursache des spezifischen Fehlers des Objekts diagnostiziert werden soll, wobei die mindestens eine bekannte Grundursache (LGn) eine Menge von Grundursachen jedes historischen Fehlers ist, und der Ähnlichkeitswert jeder bekannten Grundursache (LGn) einen Ähnlichkeitsgrad zwischen der bekannten Grundursache (LGn) und der Grundursache des spezifischen Fehlers darstellt;

ein zweites Berechnungsmodul (504), das konfiguriert ist, jeweilige Auftrittswahrscheinlichkeiten der mindestens einen bekannten Grundursache (LGn) entsprechend den Fehlerphänomenen (s1, s2, sp) jedes historischen Fehlers zu berechnen; und

ein drittes Berechnungsmodul (506), das konfiguriert ist, jeweilige Wahrscheinlichkeitswerte der mindestens einen bekannten Grundursache (LGn) auf der Grundlage der jeweiligen Ähnlichkeitswerte und der jeweiligen Auftrittswahrscheinlichkeiten der mindestens einen bekannten Grundursache (LGn) zu berechnen, wobei der Wahrscheinlichkeitswert jeder bekannten Grundursache den Wahrscheinlichkeitsgrad darstellt, dass die bekannte Grundursache (LGn) die Grundursache des spezifischen Fehlers ist;

wobei das erste Berechnungsmodul (502) Folgendes umfasst:

ein viertes Berechnungsmodul, das konfiguriert ist, einen Ähnlichkeitswert jedes historischen Fehlers durch das Verwenden eines Distanzalgorithmus, entsprechend den jeweiligen Fehlerphänomenen (s1, s2, sp) jedes historischen Fehlers und dem Fehlerphänomen des spezifischen Fehlers zu berechnen, wobei der Ähnlichkeitswert jedes historischen Fehlers den Ähnlichkeitsgrad zwischen dem historischen Fehler und dem spezifischen Fehler darstellt;

ein fünftes Berechnungsmodul, das konfiguriert ist, einen Ähnlichkeitswert der Grundursache jedes historischen Fehlers zu berechnen, wobei der Ähnlichkeitswert der Grundursache jedes historischen Fehlers gleich dem Ähnlichkeitswert jedes historischen Fehlers ist; und

ein sechstes Modul, das konfiguriert ist, jeweilige Ähnlichkeitswerte der mindestens einen bekannten Grundursache (LGn) auf der Grundlage der Ähnlichkeitswerte der Grundursachen jedes historischen Fehlers zu berechnen, und

**dadurch gekennzeichnet, dass** jedem historischen Fehler ein jeweiliger historischer Wartungsfall zugeordnet ist, der ein oder mehrere Fehlerphänomene (s1, s2, sp) des zugeordneten historischen Fehlers, eine bekannte Grundursache (LGn) und ein entsprechendes Wartungsschema enthält,

wobei der spezifische Fehler einem neuen Wartungsfall (NS) zugeordnet ist, der die Fehlerphänomene des spezifischen Fehlers enthält,

alle historischen Wartungsfälle und der neue Wartungsfall (NS) eine Wartungsfallmenge (JC) bilden,

Fehlerphänomene (s1, s2, sp) jedes historischen Wartungsfalls und die Fehlerphänomene des neuen Wartungsfalls (NS) eine Fehlerphänomenmenge (GC) bilden;

wobei der Abstandsalgorithmus SimRank ist, der entweder aus einer Wartungsfallperspektive implementiert ist, wobei jedes Fehlerphänomen, das mit einem vorgegebenen Wartungsfall in der Wartungsfallmenge (JC) verbunden ist, dem Nachbarpunkt des vorgegebenen Wartungsfalls entspricht; oder

aus einer Fehlerdiagnoseperspektive implementiert ist, wobei jeder Wartungsfall, der mit einem vorgegebenen Fehlerphänomen in der Fehlerphänomenmenge (GC) verbunden ist, dem Nachbarpunkt des vorgegebenen Fehlerphänomens entspricht.

5. Vorrichtung (500) nach Anspruch 4, die ferner Folgendes umfasst:
ein Sequenzierungsmodul, das konfiguriert ist, die mindestens eine bekannte Grundursache (LGn) in absteigender Reihenfolge entsprechend den jeweiligen Wahrscheinlichkeitswerten der mindestens einen bekannten Grundursache zu sequenzieren.

6. Vorrichtung (500) nach Anspruch 4 oder 5, wobei das zweite Berechnungsmodul (504) Folgendes umfasst:

ein siebtes Berechnungsmodul, das konfiguriert ist, mindestens eine Kandidatenwahrscheinlichkeit von irgendeiner der mindesten einen bekannten Grundursache (LGn) zu berechnen, wobei jede der mindestens einen Kandidatenwahrscheinlichkeit von irgendeiner der bekannten Grundursachen die Auftrittswahrscheinlichkeit irgendeiner der bekannten Grundursachen in dem Fall darstellt, dass ein Fehlerphänomen des mindestens einen Fehlerphänomens auftritt, und das mindestens eine Fehlerphänomen einer Menge von Fehlerphänomenen (s1, s2, sp) jedes historischen Fehlers entspricht; und

ein Bestimmungsmodul, das konfiguriert ist, die Auftrittswahrscheinlichkeit irgendeiner bekannten Grundursache entsprechend der mindestens einen Kandidatenwahrscheinlichkeit irgendeiner der bekannten Grundursachen zu bestimmen, dadurch Erhalten der jeweiligen Auftrittswahrscheinlichkeiten der mindestens einen bekannten Grundursache.

7. Maschinenlesbares Medium, auf dem ausführbare Anweisungen gespeichert sind, wobei ein Prozessor das Verfahren nach einem der Ansprüche 1 bis 3 durchführt, wenn der Prozessor die ausführbaren Anweisungen ausführt.

**Revendications**

1. Procédé mis en œuvre sur ordinateur permettant de faciliter un diagnostic de défaillance, comprenant :

le calcul de valeurs respectives de similarité d'au moins une cause profonde connue (LGn) sur la base de phénomènes respectifs de défaillance (s1, s2, sp) de chaque défaillance historique et d'un phénomène de défaillance concernant la défaillance spécifique d'un objet, lorsque la cause profonde de la défaillance spécifique de l'objet doit être diagnostiquée, où la ou les causes profondes connues (LGn) représentent un ensemble de causes profondes de chaque défaillance historique, et où la valeur de similarité de chaque cause profonde connue (LGn) représente un degré de similarité entre la cause profonde connue (LGn) et la cause profonde de la défaillance spécifique, le calcul de probabilités respectives d'occurrence de la ou des causes profondes connues (LGn) en fonction de phénomènes de défaillance (s1, s2, sp) de chaque défaillance historique, et le calcul de valeurs respectives de probabilité de la ou des causes profondes connues (LGn) sur la base des valeurs respectives de similarité et des probabilités respectives d'occurrence de la ou des causes profondes connues (LGn), la valeur de probabilité de chaque cause profonde connue représentant le degré de probabilité de ce que la cause profonde connue (LGn) est la cause profonde de la défaillance spécifique, dans lequel le calcul des valeurs respectives de similarité de la ou des causes profondes connues (LGn) comprend :

le calcul d'une valeur de similarité de chaque défaillance historique en utilisant un algorithme de distance, en fonction de phénomènes respectifs de défaillance (s1, s2, sp) de chaque défaillance historique et du phénomène de défaillance de la défaillance spécifique, la valeur de similarité de chaque défaillance historique représentant le degré de similarité entre la défaillance historique et la défaillance spécifique, le calcul d'une valeur de similarité de la cause profonde de chaque défaillance historique, la valeur de similarité de la cause profonde de chaque défaillance historique étant égale à la valeur de similarité de chaque défaillance historique, et le calcul de valeurs respectives de similarité de la ou des causes profondes connues (LGn) sur la base des valeurs de similarité des causes profondes de chaque défaillance historique, et **caractérisé en ce que** :

chaque défaillance historique est associée à un cas de maintenance historique incluant un ou plusieurs phénomènes de défaillance (s1, s2, sp) de la défaillance historique associée, une cause profonde connue et un schéma de maintenance correspondant, dans lequel la défaillance spécifique est associée à un nouveau cas de maintenance (NS) incluant les phénomènes de défaillance de la défaillance spécifique, tous les cas de maintenance historique et le nouveau cas de maintenance (NS) forment un ensemble de cas de maintenance (JC), les phénomènes de défaillance (s1, s2, sp) de chaque cas de maintenance historique et les phénomènes de défaillance du nouveau cas de maintenance (NS) forment un ensemble de phénomènes de défaillance (GC), dans lequel l'algorithme de distance est l'algorithme SimRank qui est implémenté soit selon une perspective de cas de maintenance, où chaque phénomène de défaillance relié à un cas de défaillance donnée dans l'ensemble de cas de maintenance (JC) représente le point de voisinage du cas de maintenance donné, soit selon une perspective de diagnostic de défaillance, où chaque cas de maintenance relié au phénomène de défaillance donné dans l'ensemble de phénomènes de défaillance (GC) représente le point de voisinage du phénomène de défaillance donné.

2. Procédé selon la revendication 1, comprenant en outre :
le séquencement de la ou des causes profondes connues (LGn) en ordre descendant en fonction des valeurs respectives de probabilité de la ou des causes profondes connues (LGn).

3. Procédé selon la revendication 1 ou la revendication 2, dans lequel le calcul des probabilités respectives d'occurrence de la ou des causes profondes connues (LGn) comprend :

le calcul d'au moins une probabilité candidate de l'une quelconque parmi la ou les causes profondes connues (LGn), chacune de la ou des probabilités candidates de l'une quelconque parmi les causes profondes connues représentant la probabilité d'occurrence de l'une quelconque des causes profondes connues dans le cas où apparaît un parmi au moins un phénomène de défaillance, et le ou les phénomènes de défaillance sont un ensemble de phénomènes de défaillance (s1, s2, sp) de chaque défaillance historique, et
la détermination de la probabilité d'occurrence de la cause profonde connue quelconque en fonction de la ou des probabilités candidates de l'une quelconque des causes profondes connues, ce qui permet ainsi d'obtenir les probabilités respectives d'occurrence de la ou des causes profondes connues.

4. Appareil (500) destiné à faciliter un diagnostic de défaillance, comprenant :

un premier module de calcul (502) configuré pour calculer des valeurs respectives de similarité d'au moins une cause profonde connue (LGn) sur la base de phénomènes respectifs de défaillance (s1, s2, sp) de chaque défaillance historique et d'un phénomène de défaillance concernant la défaillance spécifique d'un objet, lorsque la cause profonde de la défaillance spécifique de l'objet doit être diagnostiquée, où la ou les causes profondes connues (LGn) représentent un ensemble de causes profondes de chaque défaillance historique, et où la valeur de similarité de chaque cause profonde connue (LGn) représente un degré de similarité entre la cause profonde connue (LGn) et la cause profonde de la défaillance spécifique, un deuxième module de calcul (504) configuré pour calculer des probabilités respectives d'occurrence de la ou des causes profondes connues (LGn) en fonction de phénomènes de défaillance (s1, s2, sp) de chaque défaillance historique, et
un troisième module de calcul (506) configuré pour calculer des valeurs respectives de probabilité de la ou des causes profondes connues (LGn) sur la base des valeurs respectives de similarité et des probabilités respectives d'occurrence de la ou des causes profondes connues (LGn), la valeur de probabilité de chaque cause profonde connue représentant le degré de probabilité de ce que la cause profonde connue (LGn) est la cause profonde de la défaillance spécifique,
dans lequel le premier module de calcul (502) comprend :

un quatrième module de calcul configuré pour calculer une valeur de similarité de chaque défaillance historique en utilisant un algorithme de distance, en fonction de phénomènes respectifs de défaillance (s1, s2, sp) de chaque défaillance historique et du phénomène de défaillance de la défaillance spécifique, la valeur de similarité de chaque défaillance historique représentant le degré de similarité entre la défaillance historique et la défaillance spécifique,
un cinquième module de calcul configuré pour calculer une valeur de similarité de la cause profonde de chaque défaillance historique, la valeur de similarité de la cause profonde de chaque défaillance historique étant égale à la valeur de similarité de chaque défaillance historique, et
un sixième module, configuré pour calculer des valeurs respectives de similarité de la ou des causes profondes connues (LGn) sur la base des valeurs de similarité des causes profondes de chaque défaillance historique, et
**caractérisé en ce que** :

chaque défaillance historique est associée à un cas de maintenance historique incluant un ou plusieurs phénomènes de défaillance (s1, s2, sp) de la défaillance historique associée, une cause profonde connue et un schéma de maintenance correspondant,
dans lequel la défaillance spécifique est associée à un nouveau cas de maintenance (NS) incluant les phénomènes de défaillance de la défaillance spécifique,
tous les cas de maintenance historique et le nouveau cas de maintenance (NS) forment un ensemble de cas de maintenance (JC),
les phénomènes de défaillance (s1, s2, sp) de chaque cas de maintenance historique et les phénomènes de défaillance du nouveau cas de maintenance (NS) forment un ensemble de phénomènes de défaillance (GC),
dans lequel l'algorithme de distance est l'algorithme SimRank qui est implémenté soit selon une perspective de cas de maintenance, où chaque phénomène de défaillance relié à un cas de défaillance donnée dans l'ensemble de cas de maintenance (JC) représente le point de voisinage du cas de maintenance donné,
soit selon une perspective de diagnostic de défaillance, où chaque cas de maintenance relié au phénomène de défaillance donné dans l'ensemble de phénomènes de défaillance (GC) représente le point de voisinage du phénomène de défaillance donné.

5. Appareil (500) selon la revendication 4, comprenant en outre :
un module de séquencement configuré pour séquencer la ou les causes profondes connues (LGn) en ordre descendant en fonction des valeurs respectives de probabilité de la ou des causes profondes connues.

**6.** Appareil (500) selon la revendication 4 ou la revendication 5, dans lequel le deuxième module de calcul (504) comprend :

un septième module de calcul configuré pour calculer au moins une probabilité candidate de l'une quelconque parmi la ou les causes profondes connues (LGn), chacune de la ou des probabilités candidates de l'une quelconque parmi les causes profondes connues représentant la probabilité d'occurrence de l'une quelconque des causes profondes connues dans le cas où apparaît un parmi au moins un phénomène de défaillance, et le ou les phénomènes de défaillance sont un ensemble de phénomènes de défaillance (s1, s2, sp) de chaque défaillance historique, et

un module de détermination configurée pour déterminer la probabilité d'occurrence de la cause profonde connue quelconque en fonction de la ou des probabilités candidates de l'une quelconque des causes profondes connues, ce qui permet ainsi d'obtenir les probabilités respectives d'occurrence de la ou des causes profondes connues.

**7.** Support pouvant être lu par une machine comportant des instructions exécutables stockées, où un processeur effectue le procédé conforme à l'une quelconque des revendications 1 à 3 lorsque ledit processeur exécute les instructions exécutables.

Fig. 1

Fig. 2

EP 3 462 265 B1

Fig. 3

20

Fig. 4

500

Fig. 5

<u>600</u>

602

604

Fig. 6

**EP 3 462 265 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017097860 A1

**Non-patent literature cited in the description**

- **AKOGLU LEMAN et al.** *Graph based anomaly detection and description: a survey*